(19) **Europäisches Patentamt**

**European Patent Office**

**Office européen des brevets**

(11) **EP 1 437 739 A2**

(12) **EUROPEAN PATENT APPLICATION**

(43) Date of publication:
14.07.2004 Bulletin 2004/29

(51) Int Cl.$^7$: **G11B 27/10**

(21) Application number: **04000273.5**

(22) Date of filing: **08.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **10.01.2003 JP 2003004768**

(71) Applicant: **Kabushiki Kaisha Toshiba
Tokyo (JP)**

(72) Inventors:
• **Tsumagari, Yasufumi
Minato-ku Tokyo 105-8001 (JP)**
• **Mimura, Hideki
Minato-ku Tokyo 105-8001 (JP)**

(74) Representative: **Henkel, Feiler & Hänzel
Möhlstrasse 37
81675 München (DE)**

(54) **Information playback apparatus and information playback method**

(57)   An information playback apparatus has a first acquisition unit (100) configured to acquire contents from an information storage medium, a second acquisition unit (200,211) configured to acquire expansion information from at least one of the information storage medium and an external apparatus via a communication line, a control unit (213) configured to control an acquisition timing of expanded contents information contained in the expansion information on the basis of control information contained in the expansion information, a storage unit (209) configured to store the expanded contents information acquired by the second acquisition unit under the control of the control unit, and a playback unit (101,203,2081,2082) configured to play back the contents, and to play back the expanded contents information, which is acquired at a predetermined timing under the control of the control unit, in synchronism with playback of the contents.

F I G. 3

EP 1 437 739 A2

**Description**

The present invention relates to an information playback apparatus and information playback method for playing back contents stored in an information storage medium.

In recent years, the standard for a read-only DVD (Digital Versatile Disk) has been specified, and playback apparatus that play back video/audio information stored in read-only DVDs are commercially available.

According to the read-only DVD standard, the read-only DVD stores presentation data which records actual video and audio data, and navigation data used to manage the presentation data. The presentation data contains video data, audio data, and sub-picture data, which are multiplexed according to the specification of a program stream (2048 bytes) specified by MPEG2. The navigation data describes PGCs (ProGram Chains) and Cells, which set a time configuration and order of video and audio data to be played back. With this navigation data, multi-angle, multi-story, and parental functions can be implemented.

As a prior art associated with the above technique, an image display apparatus which provides a service that integrates a DVD-Video title and HTML file has been disclosed in Jpn. Pat. Appln. KOKAI Publication No. 11-161663. This image display apparatus extracts a URL from a navigation pack in a video object unit, and establishes connection to the Internet based on the extracted URL, so as to display data in conjunction with a scene to be played back.

According to the read-only DVD standard, only an MPEG2 program stream recorded on a disk can be played back, and information other than the MPEG2 program stream recorded on the disk cannot be played back. That is, the expandability of DVD playback is poor.

In general, the readout speed of information from a DVD is higher than the download speed of information via the Internet. That is, a given period of time is required to download information via the Internet, thus producing a certain wait time for the user. In order to solve this problem, a method of downloading all pieces of necessary information via the Internet, and then starting playback may be used. However, this method requires a large-capacity buffer for downloading, resulting an increase in cost of the apparatus.

It is an object of the present invention to provide an information playback apparatus and information playback method, which can assure high expandability of playback of an information storage medium, and can efficiently download information.

An information playback apparatus according to an aspect of the present invention comprises a first acquisition unit configured to acquire contents from an information storage medium, a second acquisition unit configured to acquire expansion information from at least one of the information storage medium and an external apparatus via a communication line, a control unit configured to control an acquisition timing of expanded contents information contained in the expansion information on the basis of control information contained in the expansion information, a storage unit configured to store the expanded contents information acquired by the second acquisition unit under the control of the control unit, and a playback unit configured to play back the contents, and to play back the expanded contents information, which is acquired at a predetermined timing under the control of the control unit, in synchronism with playback of the contents.

An information playback method according to an aspect of the present invention comprises: acquiring, by an acquisition unit, expansion information from at least one of an information storage medium and an external apparatus via a communication line; controlling an acquisition timing of expanded contents information contained in the expansion information on the basis of control information contained in the expansion information; storing the expanded contents information acquired at a predetermined timing under the control of the timing; and playing back contents acquired from the information storage medium, and playing back the expanded contents information, which is acquired at a predetermined timing under the control of the timing, in synchronism with playback of the contents.

This summary of the invention does not necessarily describe all necessary features so that the invention may also be a sub-combination of these described features.

The invention can be more fully understood from the following detailed description when taken in conjunction with the accompanying drawings, in which:

FIG. 1 shows an example of the data structure of a DVD-Video disk;
FIG. 2 shows an example of the data structure of an enhanced DVD-Video disk;
FIG. 3 is a block diagram showing an example of a DVD playback apparatus (information playback apparatus);
FIG. 4 is a block diagram showing details of an ENAV buffer, which is applied to the DVD playback apparatus shown in FIG. 3;
FIG. 5 is a block diagram showing the arrangement of a download manager and peripheral units, which are applied to the DVD playback apparatus shown in FIG. 3;
FIG. 6 shows a description example of download information corresponding to a predetermined chapter as a text file;
FIG. 7 shows the first example associated with a playback process of DVD-Video contents and a download process of ENAV contents (ENAV elements) upon playing back the ENAV contents (ENAV elements) in synchronism with the DVD-Video contents;

FIG. 8 shows the second example associated with a playback process of DVD-Video contents and a download process of ENAV contents (ENAV elements) upon playing back the ENAV contents (ENAV elements) in synchronism with the DVD-Video contents;

FIG. 9 shows a description example of download information corresponding to a plurality of chapters as a text file;

FIG. 10 is a flow chart showing a process for downloading ENAV contents (ENAV elements) and playing back the ENAV contents (ENAV elements) in synchronism with the DVD-Video contents; and

FIG. 11 shows a process for deleting unnecessary ENAV contents (ENAV elements), and downloading new required ENAV contents (ENAV elements) upon playing back DVD-Video contents.

A preferred embodiment of the present invention will be described hereinafter with reference to the accompanying drawings.

The data structure of a disk which considers compatibility to the DVD-Video standard will be explained first.

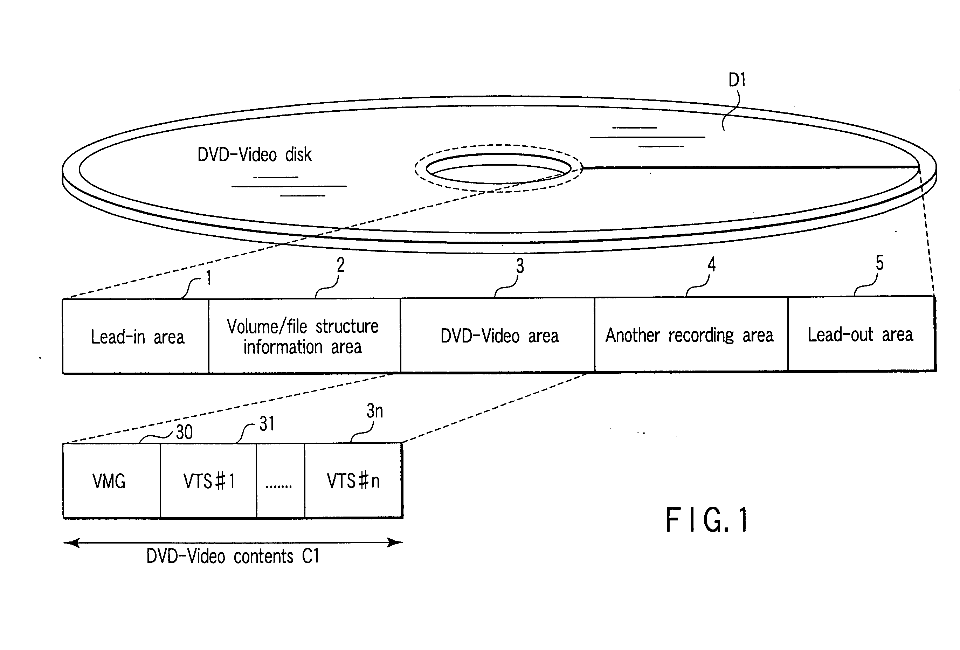

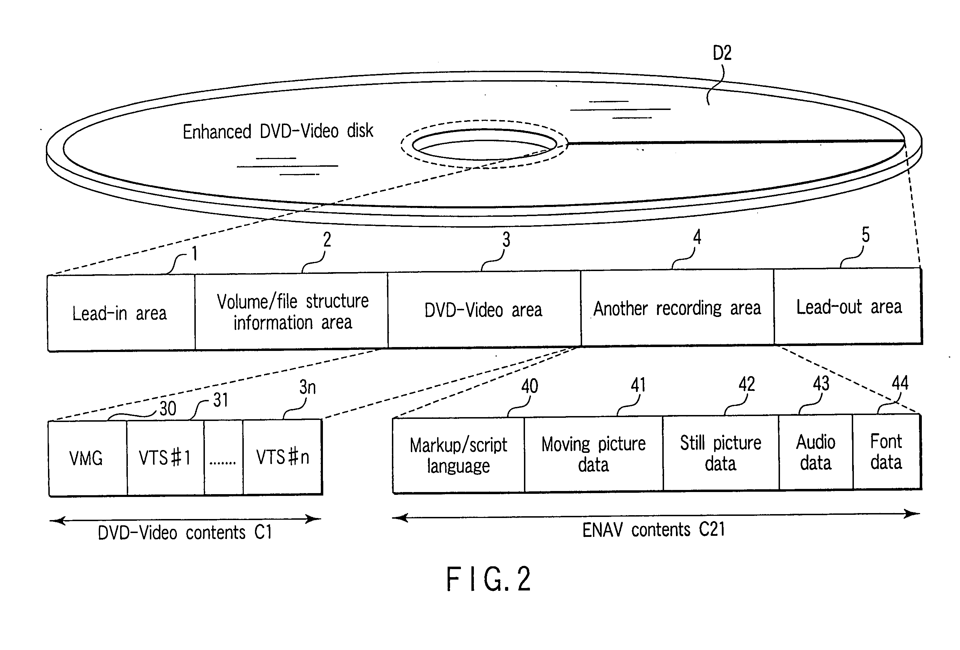

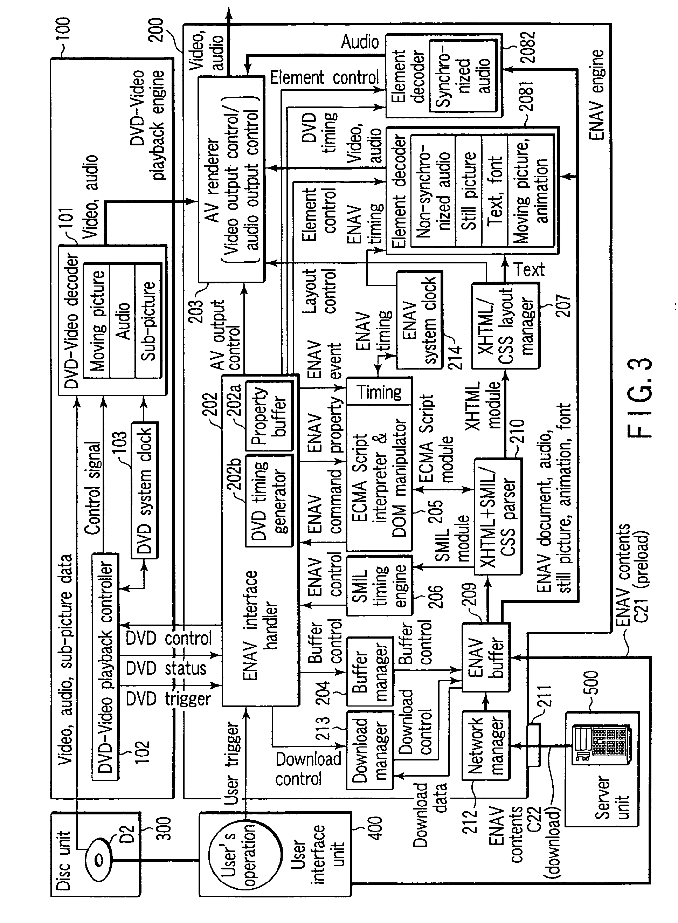

FIGS. 1 and 2 show examples of the data structures of DVD-Video disks which can be played back by a DVD-Video player shown in FIG. 3 (to be described later).

FIG. 1 shows an example of the data structure of a standard DVD-Video disk D1. A DVD-Video area 3 of the standard DVD-Video disk D1 stores DVD-Video contents C1 (having an MPEG2 program stream structure).

On the other hand, FIG. 2 shows the data structure of an enhanced DVD-Video disk D2. A DVD-Video area 3 of the enhanced DVD-Video disk D2 stores DVD-Video contents C1 (having an MPEG2 program stream structure) having the same data structure as the DVD-Video standard. Furthermore, another recording area 4 of the enhanced DVD-Video disk D2 stores enhanced navigation (to be abbreviated as ENAV hereinafter) contents C21 which allows a wide variety of playback of video contents. Note that the presence of the recording area 4 is also accepted in the DVD-Video standard.

The basic data structure of a DVD-Video disk will be explained below. The recording area of the DVD-Video disk includes a lead-in area 1, volume space, and lead-out area 5 in turn from its inner periphery. The volume space contains a volume/file structure information area 2, and DVD-Video area (DVD-Video zone) 3, and can also have another recording area (DVD other zone) 4 as an option.

The volume/file structure information area 2 is assigned for a UDF (Universal Disk Format) bridge. The volume of the UDF bridge format is recognized according to ISO/IEC13346 Part 2. A space that recognizes this volume consists of successive sectors, and starts from the first logical sector of the volume space in FIGS. 1 and 2. First 16 logical sectors are reserved for system use specified by IS09660. In order to assure compatibility to the conventional DVD-Video standard, the volume/file structure information area 2 with such contents is required.

The DVD-Video area 3 records management information called video manager VMG 30 and one or more video contents called video title sets VTS (VTS#1 to VTS#n). The VMG 30 is management information for all VTSs present in the DVD-Video area 3, and contains control data VMGI, VMG menu data VMGM_VOBS (option), and VMG backup data. Each VTS contains control data VTSI of that VTS, VTS menu data VTSM_VOBS (option), data VTSTT_VOBS of the contents (movie or the like) of that VTS (title), and VTSI backup data. To assure compatibility to the conventional DVD-Video standard, the DVD-Video area with such contents is also required.

A playback select menu or the like of each title (VTS#1 to VTS#n) is given in advance by a provider (the producer of a DVD video disk) using the VMG, and a playback chapter select menu, the playback order of recorded contents (cells), and the like in a specific title (e.g., VTS#1) are given in advance by the provider using the VTSI. Therefore, the viewer of the disk (the user of the DVD-Video player) can enjoy the recorded contents of that disk in accordance with menus of the VMG/VTSI prepared in advance by the provider and playback control information (program chain information PGCI) in the VTSI. However, with the DVD-Video standard, the viewer (user) cannot play back the contents (movie or music) of each VTS by a method different from the VMG/VTSI prepared by the provider.

The enhanced DVD-Video disk D2 shown in FIG. 2 is prepared for a mechanism that allows the user to play back the contents (movie or music) of each VTS by a method different from the VMG/VTSI prepared by the provider, and to play back while adding contents different from the VMG/VTSI prepared by the provider. The ENAV contents C21 contained in this disk D2 cannot be accessed by a DVD-Video player which is manufactured on the basis of the conventional DVD-Video standard (even if the ENAV contents can be accessed, their contents cannot be used). However, a DVD-Video player (player in FIG. 3 or the like) can access the ENAV contents C21, and can use their playback contents.

The ENAV contents C21 (C22) are configured to contain audio data, still picture data, font/text data, moving picture data, animation data, and the like, and also an ENAV document (described in a Markup/Script language) as information for controlling playback of these data. This playback control information describes, using a Markup language or Script language, playback methods (display method, playback order, playback switch sequence, selection of data to be played back, and the like) of the ENAV contents (consisting of audio, still picture, font/text, moving picture, animation, and the like) and/or the DVD-Video contents C1. For example, Markup languages such as HTML (Hyper Text Markup Language)/XHTML (extensible Hyper Text Markup Language), SMIL (Synchronized Multimedia Integration Language), and the like, Script languages such as an ECMA (European Computer Manufacturers Association) script, JavaScript, and the like, and so forth, may be used in combination.

Since the contents of the enhanced DVD-Video disk D2 in FIG. 2 except for the other recording area comply with the DVD-Video standard, video contents recorded on the DVD-Video area can be played back using an already prevalent DVD-Video player (i.e., this disk is compatible to the conventional DVD-Video disk D1).

The ENAV contents C21 recorded on the other recording area cannot be played back (or used) by the conventional DVD-Video player but can be played back and used by a DVD-Video player (FIG. 3) according to an embodiment of the present invention. Therefore, when the ENAV contents C21 (and also ENAV contents C22) are played back using the DVD-Video player according to an embodiment of the present invention, the user can enjoy not only the contents of the VMG/VTSI prepared in advance by the provider but also a variety of video playback features.

FIG. 3 shows an example of a DVD-Video player used to play back an enhanced DVD-Video disk (FIG. 2) according to the embodiment of the present invention. This DVD-Video player plays back and processes recorded contents (DVD-Video contents C1 and/or ENAV contents C21) from the enhanced DVD-Video disk D2 (FIG. 2) which is compatible to the DVD-Video standard, and downloads and processes ENAV contents C22 via a communication line such as the Internet or the like. Note that the ENAV contents C21 are first expansion information, and the ENAV contents C22 are second expansion information.

Note that ENAV contents C21 and C22 are one type of expansion information.

The DVD-Video player shown in FIG. 3 comprises a DVD-Video playback engine 100, ENAV engine 200, disk unit 300, and user interface unit 400. The DVD-Video playback engine 100 plays back and processes an MPEG2 program stream (DVD-Video contents C1) recorded on the disk D2. The ENAV engine 200 plays back and processes the ENAV contents C21 and C22. The disk unit 300 reads out the DVD-Video contents C1 and/or ENAV contents C21 recorded on the disk D2. The user interface unit 400 transmits inputs (user's operations) by the user of the player as user trigger.

The ENAV engine 200 comprises an Internet connection unit 211. The Internet connection unit 211 serves as a communication means used to establish connection to a communication line such as the Internet or the like. Furthermore, the ENAV engine 200 comprises an ENAV buffer unit (preload/download buffer) 209, XHTML+SMIL/CSS parser 210, XHTML/CSS layout manager 207, ECMA Script interpreter & DOM manipulator 205, SMIL timing engine 206, ENAV interface handler 202, element decoders 2081 and 2082, AV renderer 203, buffer manager 204, download manager 213, network manager 212, and ENAV system clock 214.

In the block arrangement shown in FIG. 3, a DVD-Video playback controller 102, a DVD-Video decoder 101, a DVD system clock 103, the ENAV interface handler 202, the XHTML+SMIL/CSS parser 210, the ECMA Script interpreter & DOM manipulator 205, the SMIL timing engine 206, the XHTML/CSS layout manager 207, the AV renderer 203, the element decoders 2081 and 2082, the buffer manager 204, the download manager 213, the network manager 212, the ENAV system clock 214, and the like can be implemented by a microcomputer (and/or hardware logic) which serves as functions of the respective blocks by an installed program (firmware; not shown). A work area used upon executing this firmware can be assured on a semiconductor memory (and a hard disk as needed; not shown) in the respective blocks.

The DVD-Video playback engine 100 is a device for playing back the DVD-Video contents C1 based on the existing DVD-Video standard, and includes the DVD-Video decoder 101 which decodes the DVD-Video contents C1 loaded by the disk unit 300, the DVD-Video playback controller 102 which makes playback control of the DVD-Video contents C1, and the DVD system clock 103 that determines the decode and output timings in the DVD-Video decoder.

The DVD-Video decoder 101 has a function of decoding video data, audio.data, and sub-picture data based on the existing DVD-Video standard, and outputting the decoded video data (mixed data of the aforementioned video and sub-picture data) and audio data, respectively. With this function, the DVD-Video playback engine 100 has the same function as that of a playback engine of a normal DVD-Video player, which is manufactured based on the existing DVD-Video standard. That is, the player shown in FIG. 3 can play back video data, audio data, and the like of an MPEG2 program stream as in a normal DVD-Video player, and can play back an existing DVD-Video disk (complying with the conventional DVD-Video standard) D1.

In addition, the DVD-Video playback controller 102 can also control playback of the DVD-Video contents C1 in accordance with a "DVD control" signal output from the ENAV engine 200. More specifically, if an arbitrary event (e. g., menu call or title jump) has occurred in the DVD-Video playback engine 100 in a DVD-Video playback mode, the DVD-Video playback controller 102 can output a "DVD trigger" signal indicating the playback status of the DVD-Video contents C1 to the ENAV engine 200. In this case (simultaneously with output of the DVD trigger signal or at an appropriate timing before and after the output), the DVD-Video playback controller 102 can output a "DVD status" signal indicating property information (e.g., an audio language, sub-picture subtitle language, playback operation, playback position, various kinds of time information, disk contents, and the like set in the player) of the DVD-Video player to the ENAV engine 200.

The ENAV interface handler 202 receives "user trigger" signals corresponding to user's operations (menu call, title jump, play start, play stop, play pause, etc.) from the user interface unit 400. The ENAV interface handler 202 then transfers the received "user trigger" signals as corresponding ENAV events to the ECMA Script interpreter & DOM manipulator 205. For example, the ENAV document makes the following instructions in response to the ENAV events.

1. Issue an ENAV command corresponding to a user's operation. That is, the same command as the user's operation is transferred to the DVD-Video playback engine 100 as DVD control.

2. Issue an ENAV command different from a user's operation. That is, the user's operation is replaced by another operation in accordance with the instruction of the ENAV document.

3. Ignore the user trigger. That is, the user event is inhibited since, for example, a DVD-Video playback process that is not designed by the contents provider may be made.

Note that the contents of the user trigger signal transmitted to the ENAV interface handler 202 may be transmitted to the AV renderer 203 as an "AV output control" signal. As a result, for example, when the user has changed the contents or window size or has shifted its display position using a cursor key of a remote controller (not shown), a user trigger signal is output to the AV renderer 203 as a corresponding AV output control signal. In addition, when a user event indicating switching between a video/audio output from the DVD-Video playback engine 100 and that from the ENAV engine 200 is sent to the AV renderer 203, the video/audio output can be switched in response to user's operation.

The ENAV interface handler 202 exchanges a "DVD status" signal, "DVD trigger" signal, and/or "DVD control" signal with the DVD-Video playback controller 102, or exchanges a "user trigger" signal with the user interface unit 400. Furthermore, the ENAV interface handler 202 exchanges an "ENAV event", "ENAV property", "ENAV command", and "ENAV control" signal with the ECMA Script interpreter & DOM manipulator 205 and SMIL timing engine 206. More specifically, the ENAV interface handler 202 executes the following processes.

1. The handler 202 transmits a "DVD trigger" signal which is received from the DVD-Video playback engine 100 and indicates the operation of the DVD-Video playback engine 100, or a "user trigger" which is received from the user interface unit 400 and indicates the user's operation to the ECMA Script interpreter & DOM manipulator 205 and SMIL timing engine 206 as an "ENAV event".

2. The handler 202 transmits a "DVD status" signal which is received from the DVD-Video playback engine 100 and indicates the playback status of the DVD-Video playback engine 100 to the ECMA Script interpreter & DOM manipulator 205 and SMIL timing engine 206 as an "ENAV property". At this time, DVD status information is saved in a property buffer 202a of the ENAV interface handler 202 as needed.

3. The handler 202 transmits an "ENAV control" signal from the SMIL timing engine 206 to the DVD-Video playback engine 100 as a "DVD control" signal.

4. The handler 202 outputs a "DVD control" signal used to control playback of the DVD-Video playback engine 100 to the DVD-Video playback engine 100, an "AV output control" signal used to switch video and audio data to the AV renderer 203, a "buffer control" signal used to load/erase the contents of the buffer to the buffer manager 204, a "download control" signal used to download ENAV contents stored in the server unit to the download manager 213, and an "element control" signal that instructs to decode ENAV elements (expanded contents information) to the element decoders 2081 and 2082, in accordance with the contents of an "ENAV command" signal from the ECMA Script Interpreter & DOM manipulator 205.

5. The handler 202 measures information of the DVD system clock in the DVD-Video playback engine 100 using its DVD timing generator 202b, and transfers it as a "DVD timing" signal to the element decoder 2082. That is, the element decoder 2082 can decode ENAV elements in synchronism with the system clocks of the DVD-Video playback engine 100.

As described above, the ENAV interface handler 202 has a function of parsing and interpreting ENAV contents, and then converting control signals and the like between the DVD-Video playback engine 100 and ENAV engine 200.

The ENAV interface handler 202 is configured to exchange a first signal and to exchange a second signal on the basis of the contents which are parsed by the XHTML+SMIL/CSS parser 210 and are interpreted by the ECMA Script interpreter & DOM manipulator 205 and SMIL timing engine 206, or a user trigger from an input device. In other words, the ENAV interface handler 202 controls the output states of video and audio signals by the AV renderer 203 on the basis of at least one of the first signal exchanged with the DVD-Video playback controller 102, and the second signal exchanged with the ECMA Script interpreter & DOM manipulator 205 and SMIL timing engine 206. The first signal pertains to the playback status of the DVD-Video disk D2, and corresponds to the "DVD control" signal, "DVD trigger" signal, "DVD status" signal, and the like. The second signal pertains to the contents of the ENAV contents, and corresponds to the "ENAV event" signal, "ENAV command" signal, "ENAV property" signal, "ENAV control" signal, and the like.

Note that the ENAV interface handler 202 is configured to execute processes corresponding to user triggers in accordance with the ENAV document. The AV renderer 203 is configured to mix video/audio data generated by the element decoder 2081 with video/audio data played back by the DVD-Video playback engine 100, and to output the mixed data on the basis of the execution result of the process corresponding to the user trigger signal. Or the AV renderer 203 is configured to select one of video/audio data generated by the element decoder 2081 and video/audio data played back by the DVD-Video playback engine 100, and to output the selected video/audio data on the basis of the execution result of an ENAV command in the ENAV interface handler 202.

Generally speaking, the XHTML+SMIL/CSS parser 210 parses an ENAV document indicating playback control information, which is contained in the ENAV contents C21 acquired from the DVD-Video disk D2 or the ENAV contents C22 acquired from the Internet or the like. The ENAV document is made up of a combination of Markup languages such as HTML/XHTML, SMIL, and the like, and Script languages such as ECMA Script, JavaScript, and the like, as described above. The XHTML+SMIL/CSS parser 210 has a function of transmitting an ECMA Script module to the ECMA Script interpreter & DOM manipulator 205, SMIL module to the SMIL timing engine 206, and XHTML module to the XHTML/CSS layout manager 207 in accordance with the parsing result.

The ECMA Script interpreter & DOM manipulator 205 interprets the aforementioned ECMA Script module and follows its instruction. That is, the ECMA Script interpreter & DOM manipulator 205 has a function of issuing an "ENAV command" signal to the ENAV interface handler 202 in correspondence with an "ENAV event" signal sent from the ENAV interface handler 202 or an "ENAV property" signal read from the property buffer of the ENAV interface handler 202.

At this time, the ECMA Script interpreter & DOM manipulator 205 issues an "ENAV command" signal to the DVD-Video playback engine 100 or issues an "element control" signal to the element decoder 2081 in accordance with the time measured by the ENAV system clock 214, thus controlling the DVD-Video playback engine 100 or decoding ENAV elements (expanded contents information). The ENAV elements are audio data, still picture data, text/font data, moving data and/or picture/animation data.

The SMIL timing engine 206 interprets the aforementioned SMIL module and follows its instruction. That is, the SMIL timing engine 206 has a function of issuing an "ENAV control" signal to the ENAV interface handler 202 or element decoder 208 in correspondence with an "ENAV event" signal sent from the ENAV interface handler 202 or an "ENAV property" signal read from the property buffer of the ENAV interface handler 202 in accordance with the ENAV System clock 214. With this function, control of the DVD-Video playback engine 100 and playback of video data (moving picture, still picture, animation) and audio data can be achieved at a desired timing.

The XHTML/CSS layout manager 207 interprets the aforementioned XHTML module and follows its instruction. That is, the XHTML/CSS layout manager 207 outputs a "layout control" signal to the AV renderer. The "layout control" signal contains information associated with the size and position of a video window to be output (this information often contains information associated with a display time such as display start, end, or continue), and information associated with the level of audio data to be output (this information often contains information associated with an output time such as output start, end, or continue). Also, text information to be displayed, which is contained in the XHTML module, is sent to the element decoder 208, and is decoded and displayed using desired font data.

Practical methods of parsing and interpreting Markup and Script languages can adopt the same methods as parsing/interpretation in state-of-the-art techniques such as HTML/XHTML, SMIL, and the like or ECMA Script, JavaScript, and the like (the hardware used is the microcomputer that has been mentioned at the beginning of the description of FIG. 3). Note that commands and variables described in Scripts are different since objects to be controlled are different. The ENAV document used upon practicing the present invention uses unique commands and variables associated with playback of the DVD-Video disk D2 and/or the ENAV contents C21 or C22. For example, a command that switches the playback contents of the DVD-Video disk D2 or the ENAV contents C21 or C22 in response to a given event is unique to a Markup or Script language in the ENAV document.

As another example of commands and variables unique to a Markup or Script language in the ENAV document, those which are used to change the video size from the DVD-Video playback engine 100 and/or ENAV engine 200 and to change the layout of that video data are available. A change in video size is designated using a size change command and a variable that designates the size after change. A change in video layout is designated by a display position change command and a variable that designates the coordinate position or the like after change. When objects to be displayed overlap on the screen, a variable that designates depth ordering is added. Also, commands and variables used to change the audio level from the DVD-Video playback engine 100 and/or ENAV engine 200 or to select an audio language to be used are available. A change in audio level is designated by an audio level change command and a variable that designates an audio level after change. An audio language to be used is selected by an audio language change command and a variable that designates the type of language after change. Furthermore, commands and variables used to control user trigger from the user interface unit 400.

On the basis of the commands/variables of the Markup and Script languages in the ENAV document, as exemplified above, a "layout control" signal is sent from the XHTML/CSS layout manager (some functions are often implemented by the SMIL timing engine 206) to the AV renderer 203. The "layout control" signal controls the layout on the screen, size, output timing, and output time of video data to be displayed on, e.g., an external monitor device or the like (not shown), and/or the tone volume, output timing, and output time of audio data to be played back from an external loudspeaker (not shown).

The element decoder 208 decodes ENAV contents data such as audio data, still picture data (include background picture data), text/font data, moving picture data, animation data, and the like contained in the ENAV contents C21 or C22. That is, the element decoder 208 includes an audio decoder, still picture decoder, text/font decoder, and animation/moving picture decoder in correspondence with objects to be decoded. For example, audio data in the ENAV contents, which is encoded by, e.g., MPEG, AC-3, or DTS is decoded by the audio decoder and is converted into non-compressed audio data. Still picture data or background picture data, which is encoded by JPEG, GIF, or PNG, is decoded by the still picture decoder, and is converted into non-compressed image data. Likewise, moving picture/animation data, which is encoded by MPEG2, MPEG4, Macromedia Flash, or SVG (Scalable Vector Graphics) is decoded by the moving picture/animation decoder, and is converted into non-compressed moving picture data. Text data contained in the ENAV contents is decoded by the text/font decoder using font data contained in the ENAV contents, and is converted into text image data which can be superimposed on a moving or still picture. Video/audio data, which contains these decoded audio data, image data, animation/moving picture data, and text image data as needed, is sent from the element decoder 208 to the AV renderer 203.

These ENAV contents are decoded in accordance with an instruction of an "element control" signal from the ENAV interface handler 202. Also, ENAV contents (e.g., audio commentary data, audio after-recording data) which are synchronous with the DVD-Video contents are decoded in synchronism with a "DVD timing" signal from the ENAV interface handler 202. Furthermore, ENAV contents which are asynchronous with the DVD-Video contents are decoded in synchronism with an "ENAV timing" signal from the ENAV system clock 214.

The AV renderer 203 has a function of controlling a video/output output. More specifically, the AV renderer 203 controls, e.g., the video display position and size (often including the display timing and display time together), and the audio level (often including the output timing and output time together) in accordance with the "layout control" signal output from the XHTML/CSS layout manager 207. Also, the AV renderer 203 performs pixel conversion of a video to be displayed in accordance with the type of the designated monitor and/or the type of the video to be displayed. The video/output outputs to be controlled are those from the DVD-Video playback engine 100 and element decoder 2081. Furthermore, the AV renderer 203 has a function of controlling mixing and switching of the DVD-Video contents C1 and ENAV contents C21 or C22 in accordance with an "AV output control" signal output from the ENAV interface handler 202.

Note that the ENAV engine 200 in the DVD-Video player in FIG. 3 comprises an interface for sending the ENAV document in the ENAV contents C21 read from the DVD-Video disk D2 to the XHTML+SMIL/CSS parser 210 via the ENAV buffer unit 209, and an interface for sending data (audio data, still picture data, text/font data, moving picture data, and the like) in the read ENAV contents C21 to the element decoder 208 via the ENAV buffer unit 209. These interfaces form an interface (first interface) independent from the Internet connection unit 211 in FIG. 3.

The DVD-Video player in FIG. 3 comprises an interface for receiving the ENAV contents C22 from a communication line such as the Internet or the like, and sending the ENAV document in the received ENAV contents C22 to the XHTML+SMIL/CSS parser 210 via the ENAV buffer unit 209, and an interface for sending data (audio data, still picture data, text/font data, moving picture data, and the like) in the received ENAV contents C22 to the element decoder 208 via the ENAV buffer unit 209. These interfaces form the Internet connection unit (second interface) shown in FIG. 3.

The ENAV buffer unit 209 comprises buffers used to store the ENAV contents C22 downloaded from the server unit 500, and to store the ENAV contents C21 loaded from the enhanced DVD-Video disk D2 by the disk unit 300.

The ENAV buffer unit 209 reads the ENAV contents C22 on an external server (server unit 500) under the control of the buffer manager 204 based on the ENAVE documents (Markup/Script language), and downloads the ENAV contents C22 via the Internet connection unit 211.

The ENAV buffer unit 209 loads the ENAV contents C21 recorded on the enhanced DVD-Video disk D2 under the control of the buffer manager 204 based on the ENAV document (Markup/Script language). At this time, if the disk unit 300 is a device that can access the disk at high speed, it can read out the ENAV contents C21 from the enhanced DVD-Video disk D2 while playing back the DVD-Video contents C1, i.e., reading out DVD-Video data from the enhanced DVD-Video disk D2. If the disk unit 300 is not a device that can make high-speed access, or if the playback operation of the DVD-Video contents C1 is to be perfectly guaranteed, playback of the DVD-Video contents C1 must not be interrupted. In such case, the ENAV contents C21 are read out from the enhanced DVD-Video disk D2 and are stored in a preload unit (not shown) of the ENAV buffer unit 209 in advance prior to the beginning of playback. In this way, since the ENAV contents C21 are read out from the preload unit simultaneously when the DVD-Video contents C1 are read out from the enhanced DVD-Video disk D2, the load on the disk unit 300 can be reduced. Hence, the DVD-Video contents C1 and ENAV contents can be simultaneously played back without interrupting playback of the DVD-Video contents C1.

In this way, when the ENAV contents C22 downloaded from the server unit 500 are stored in the ENAV buffer unit 209 in the same manner as the ENAV contents C21 recorded on the enhanced DVD-Video disk D2, the DVD-Video contents C1 and ENAV contents C22 can be simultaneously read out and played back.

The ENAV buffer unit 209 has a limited storage capacity. That is, the data size of ENAV contents C21 or C22 that can be stored in the ENAV buffer unit 209 is limited. For this reason, it is possible to erase ENAV contents C21 or C22 with low necessity and to save those with high necessity under the control of the buffer manager 204 (buffer control). Such save control and erase control may be automatically executed by the ENAV buffer unit 209.

The buffer manager 204 can send the following instructions as "buffer control" to the ENAV buffer unit 209 in accordance with an instruction of the ENAV document.

- load a specific file or a part of file from a server (download)
- load a specific file or a part of file from a disk (preload)
- erase a specific file or a part of file from a buffer

The download manager 213 has a function of acquiring download data from the enhanced DVD disk D2 of the disk unit 300 or the server unit 500 in accordance with an instruction of the ENAV document, parsing the download data, downloading required ENAV contents from the server unit 500 (download control), and holding the downloaded contents in the ENAV buffer unit 209.

For example, when the download data is made up of a file name to be downloaded, location, file size, and contents type, the download manager 213 loads download data on the disk or that on the server at a timing designated by the ENAV document. The download manager 213 instructs to download data in the order they are described in the file (or all data at the same time) (download control).

For example, when the download data is made up of a file name to be downloaded, location, file size, contents type, playback start time, and playback end time, the download manager 213 loads the ENAV document, and also download data on the disk or that on the server designated by the ENAV document at the same time. The download manager 213 loads ENAV contents with high priority of playback until the ENAV buffer becomes full of data with reference to the file size and playback start time of the download data, and starts playback. Then, the download manager 213 erases ENAV contents that have been played back from the ENAV buffer with reference to the playback end time, and loads new ENAV contents.

The network manager 212 controls the operation of the Internet connection unit 211. That is, when the ENAV document instructs connection/disconnection to/from the network as an ENAV command, the network manager 212 switches connection/disconnection of the Internet connection unit 211.

The building components of the ENAV engine in FIG. 3 can also be summarized as follows. That is, the ENAV engine comprises:

- XHTML+SMIL/CSS parser 210
    The XHTML+SMIL/CSS parser 210 parses the contents of the ENAV documents.
- ECMA Script Interpreter & DOM manipulator 205, SMIL timing engine 206, XHTML/CSS layout manager 207
    The ECMA Script Interpreter & DOM manipulator 205, SMIL timing engine 206, and XHTML/CSS layout manager 207 respectively interpret the parsed modules.
- ENAV interface handler 202
    The ENAV interface handler 202 handles control signals from the ECMA Script Interpreter & DOM manipulator 205 and SMIL timing engine 206, and those from the DVD-Video playback controller 102.
- Element decoder 208
    The element decoder 208 generates video/audio data corresponding to audio data, still picture data, text/font data, moving picture data, and the like contained in the ENAV contents C21 or C22 synchronized system clock of the DVD playback engine and ENAV engine.
- AV renderer 203
    The AV renderer 203 outputs data obtained by mixing video/audio data generated by the element decoder 208 to that played back by the DVD-Video playback engine 100 on the basis of the execution result of the ENAV command in the ENAV interface handler 202. Or the AV handler 203 selectively outputs one of video/audio data generated by the element decoder 208 and that played back by the DVD-Video playback engine 100 on the basis of the execution result of the ENAV command in the ENAV interface handler 202.
- ENAV buffer unit 209
    The ENAV buffer unit 209 temporarily stores the ENAV contents C22 acquired from the disk unit 300 or from the server unit 500 via the Internet connection unit 211.

- Download manager 213

The download manager 213 downloads ENAV contents from the server unit to the ENAV buffer on the basis of download data.

- Network manager 212

The network manager 212 controls connection/disconnection to/from the network and the like in accordance with an instruction of the ENAV document.

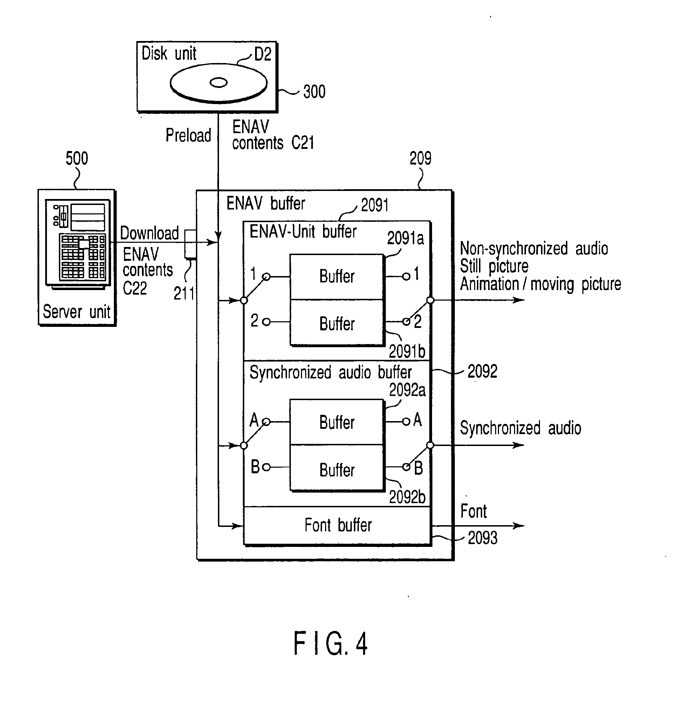

FIG. 4 shows the arrangement of the ENAV buffer 209.

For example, the ENAV buffer 209 comprises an ENAV-Unit buffer 2091, synchronized audio buffer 2092, and font buffer 2093. The ENAV-Unit buffer 2091 stores an ENAV-Unit contained in the ENAV contents C21 acquired from the enhanced DVD disk D2 or ENAV contents C22 acquired from the server unit 500. The synchronized audio buffer 2092 stores synchronized audio data contained in the ENAV contents C21 or C22. The font buffer 2093 stores font data.

Note that the ENAV-Unit is made up of an ENAV document (Markup language/Script language), still picture data, animation/moving picture data, and non-synchronized audio data. Of the ENAV-Unit data stored in the ENAV-Unit buffer 2091, the still picture data, animation/moving picture data, and non-synchronized audio data are respectively decoded by a still picture decoder, animation/moving picture decoder, and non-synchronized audio decoder in the element decoder 2081, and are output from the AV renderer 203 as video and audio outputs. On the other hand, the ENAV document is parsed by the XHTML+SMIL/CSS parser 210.

The synchronized audio data indicates audio data which is to be synchronized with the whole or partial DVD-Video contents C1. For example, the synchronized audio data is used in applications such as substitution of audio data recorded in DVD-Video (e.g., to substitute English audio data recorded in a given DVD title by Japanese audio data), mixing of another audio data to that already recorded in DVD-Video (e.g., to add comments of the director about a movie title to audio data of that movie), and the like. On the other hand, the non-synchronized audio data indicates effect sound data of click tones, alarm tones, and the like, and audio data of audio clips, background music, and the like.

The ENAV-Unit buffer 2091 comprises buffers 2091a and 2091b. The input to the ENAV-Unit buffer 2091 is supplied to one of the buffers 2091a and 2091b. The output from the ENAV-Unit buffer 2091 is that from one of the buffers 2091a and 2091b. Switching of input data to one of the buffers 2091a and 2091b and switching of output data from one of the buffers 2091a and 2091b are controlled by a buffer control signal from the buffer manager 204.

The synchronized audio buffer 2092 comprises buffers 2092a and 2092b. The input to the synchronized audio buffer 2092 is supplied to one of the buffers 2092a and 2092b. The output from the synchronized audio buffer 2092 is that from one of the buffers 2092a and 2092b. Switching of input data to one of the buffers 2092a and 2092b and switching of output data from one of the buffers 2092a and 2092b are controlled by a buffer control signal from the buffer manager 204.

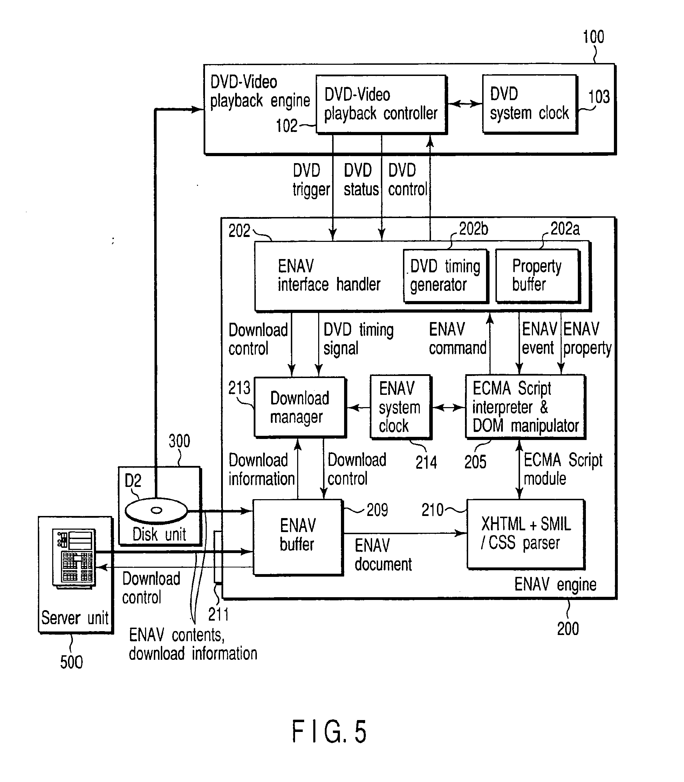

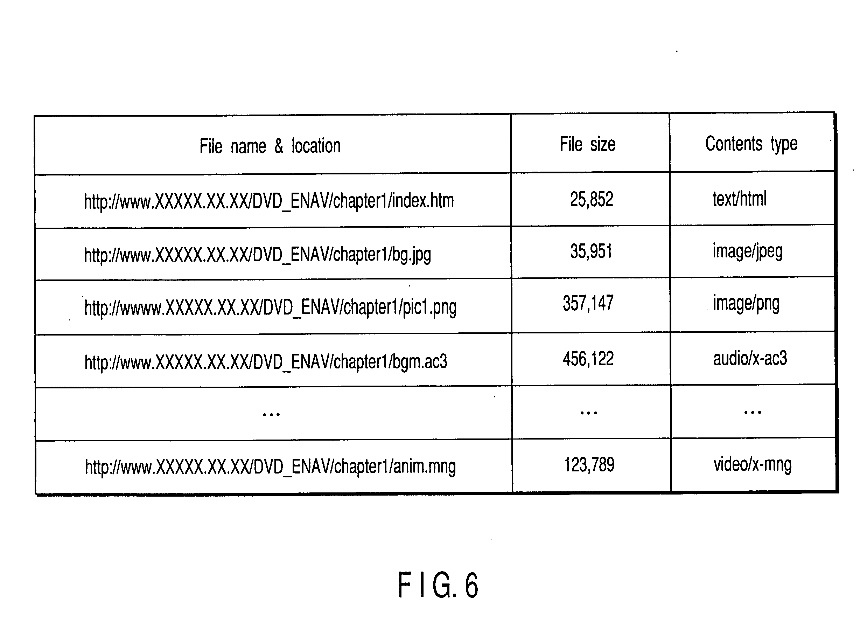

FIG. 5 shows the arrangement of the download manager 213 and its peripheral units. FIG. 6 shows an example of various kinds of information indicated by download information, which is contained in expansion information.

As shown in FIG. 6, the download information contained in the expansion information is control information used to control download, and contains file management information for each file to be downloaded. That is, one file management information is assigned to one file to be downloaded. The file management information contains the file name and location (place where the file is present), the file size, and the MIME type (indicating the type of that data) as a contents type of the file to be downloaded.

This download information is acquired from the enhanced DVD-Video disk D2 or external server unit 500. The acquired download information is stored in the ENAV buffer 209. The XHTML+SMIL/CSS parser 210 issues a download command (ENAV command) at a designated timing in accordance with an instruction of the ENAV document stored in the ENAV buffer 209.

Upon reception of this download command, the ENAV interface handler 202 sends a download instruction (download control) to the download manager 213. The download manager 213 loads designated download information stored in the ENAV buffer 209 in accordance with that download control, and downloads respective files (ENAV contents) described in the download information to the ENAV buffer 209.

At this time, respective files can be downloaded in the order described in the download information. For example, respective files may have different times required to play back contents. In such case, the download information describes file names in descending order of priority of files, thus allowing efficient downloading.

In addition, download instructions (download) of all files can be issued at the same time. For example, a plurality of files described in the download information may be recorded in a plurality of different server units. In such case, download instructions can be simultaneously issued to the respective server units without imposing any load.

FIG. 6 shows an example of the download information which is described as a text file. The download information consists of a file name & location field, file size field, and contents type field. In this example, the file name & location field describes the URL address and file name of each file to be downloaded, the file size field describes the file size of that file in bytes, and the contents type field describes the MIME type of the file.

The download information in FIG. 6 can be described in the XML format as follows.

```xml
<?xml version="1.0" encoding="utf-8" ?>
<DownloadInformation
xmlns="http://XXXXX.XX.XX/di_schema.xsd">
<DownloadInfromationID>1</DownloadInformationID>
<DownloadInfromationName>Chapter1</DownloadInformationN
ame>
<DownloadData>
   <DownloadID>1</DownloadID>
   <DownloadName>index.htm</DownloadName>

<DownloadLocation>http://www.XXXXX.XX.XX/DVD_ENAV/chapt
er1/index.htm</DownloadLocation>
   <DownloadFileSize>25852</DownloadFileSize>
   <DownloadContentType>text/html</DownloadContentType>
</DownloadData>
<DownloadData>
   <DownloadID>2</DownloadID>
   <DownloadName>bg.jpg</DownloadName>

<DownloadLocation>http://www.XXXXX.XX.XX/DVD_ENAV/chapt
er1/bg.jpg</DownloadLocation>
   <DownloadFileSize>35951</DownloadFileSize>
   <DownloadContentType>image/jpeg</DownloadContentType>
</DownloadData>
<DownloadData>
   <DownloadID>3</DownloadID>
   <DownloadName>pic1.png</DownloadName>

<DownloadLocation>http://wwww.XXXXX.XX.XX/DVD_ENAV/chap
ter1/pic1.png</DownloadLocation>
   <DownloadFileSize>357147</DownloadFileSize>
   <DownloadContentType>image/png</DownloadContentType>
</DownloadData>
<DownloadData>
   <DownloadID>4</DownloadID>
   <DownloadName>bmg.ac3</DownloadName>
```

```
<DownloadLocation>http://www.XXXXX.XX.XX/DVD_ENAV/chapt
er1/bgm.ac3</DownloadLocation>
    <DownloadFileSize>456122</DownloadFileSize>
    <DownloadContentType>audio/x-
ac3</DownloadContentType>
</DownloadData>
<DownloadData>
    <DownloadID>99</DownloadID>
    <DownloadName>anim.mng</DownloadName>

<DownloadLocation>http://www.XXXXX.XX.XX/DVD_ENAV/chapt
er1/anim.mng</DownloadLocation>
    <DownloadFileSize>123789</DownloadFileSize>
    <DownloadContentType>video/x-
mng</DownloadContentType>
</DownloadData>
</DownloadInformation>
```

One download information (DownloadInformation) consists of one download information ID (DownloadInformationID), one download information name (DownloadInformationName), and one or more download data (DownloadData). One download data consists of one download ID (DownloadID), one download name (DownloadName) indicating a file name, one download location (DownloadLocation) indicating a file name and location, one download file size (DownloadFileSize) indicating the file size in bytes, and one download content type (DownloadContentType) indicating the MIME type.

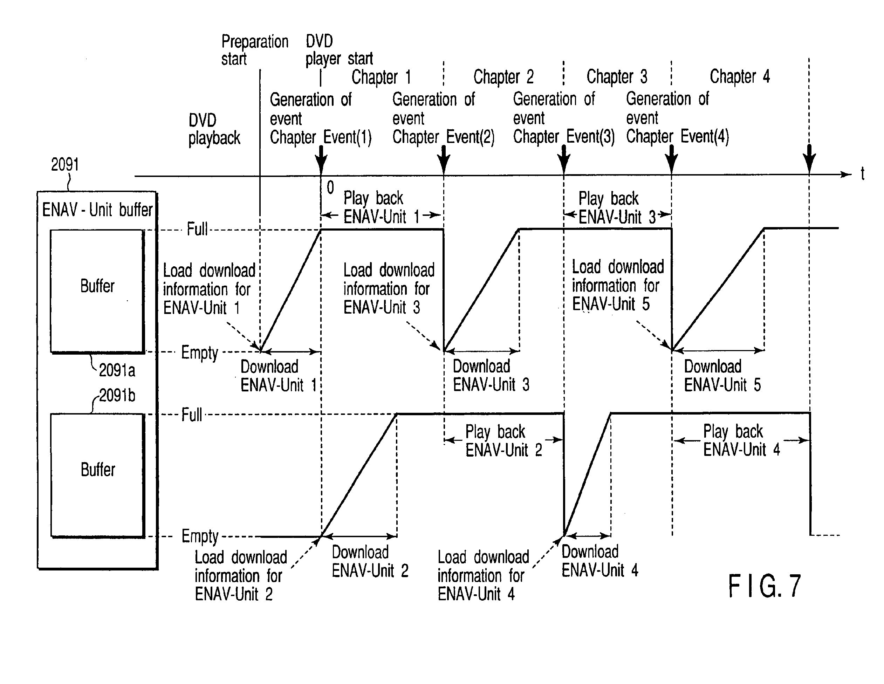

FIG. 7 shows the relationship between the playback process of the DVD-Video contents C1 and the download process of the ENAV contents C22 upon playing back the ENAV contents C22 to be acquired from the server unit 500 in synchronism with the DVD-Video contents C1.

In this example, one ENAV-Unit is made up of ENAV contents (ENAV document, still picture data, animation/ moving picture data, audio data, and the like) synchronized with one chapter of the DVD-Video contents C1. For example, ENAV-Unit 1 is played back in synchronism with Chapter 1 of the DVD-Video contents C1, and ENAV-Unit 2 is played back in synchronism with Chapter 2 of the DVD-Video contents. One ENAV-Unit is formed to have a size that can be stored in the buffer 2091a or 2091b in the ENAV-Unit buffer 2091.
Respective ENAV-Units synchronized with the DVD-Video contents C1 are alternately recorded in the buffers 2091a and 2091b.

Upon starting up the ENAV engine 200, the download manager 213 loads download information for ENAV-Unit 1 in accordance with an instruction of the ENAV document. The download information for ENAV-Unit 1 describes the file names and locations, file sizes, and contents types of an ENAV document (Markup language/Script language), still picture data, animation/moving picture data, and non-synchronized audio data, which form ENAV-Unit 1, i.e., the ENAV-Unit synchronized with Chapter 1. The download manager 213 acquires files described as those for ENAV-Unit 1 from the server unit 500 or the enhanced DVD-Video disk D2 in the disk unit 300 on the basis of the download information for ENAV-Unit 1, and loads them onto the buffer 2091a of the ENAV-Unit buffer 2091. At this time, data may be loaded from the server unit 500 or the enhanced DVD-Video disk D2 in the disk unit 300 on the basis of the download information in the order described in the file or all data may begin to be loaded at the same time.

Upon completion of downloading of the data of ENAV-Unit 1, the AV renderer 203 starts synchronous playback of Chapter 1 of the DVD-Video contents C1 and ENAV-Unit 1 of the ENAV contents C22. When playback of Chapter 1 has started, a playback start event (ChapterEvent(1)) of Chapter 1 is generated. In response to this event, the download manager 213 loads download information for ENAV-Unit 2. The download information for ENAV-Unit 2 describes the file names and locations, file sizes, and contents types of an ENAV document (Markup language/Script language), still picture data, animation/moving picture data, and non-synchronized audio data, which form ENAV-Unit 2, i.e., the ENAV-Unit synchronized with Chapter 2. The download manager 213 acquires files described as those for ENAV-Unit 2 from the server unit 500 or the enhanced DVD-Video disk D2 in the disk unit 300 on the basis of the download information for ENAV-Unit 2, and loads them onto the buffer 2091b of the ENAV-Unit buffer 2091. At this time, since the DVD-Video playback engine 100 is playing back Chapter 1 of the DVD-Video contents C1, the download source must be limited to only the server unit 500 so as to guarantee seamless playback of the DVD-Video contents C1. Also, some data of ENAV-Unit 2 to be downloaded may have already been downloaded to the buffer 2091a. For example, some data of ENAV-Unit 2 may often overlap those of ENAV-Unit 1. In such case, the time required to download ENAV-Unit 2 can be shortened by referring to some data in the buffer 2091a or copying them to the buffer 2091b.

When playback of Chapter 1 of the DVD-Video contents C1 is complete and that of Chapter 2 has started, a playback event (ChapterEvent(2)) of Chapter 2 is generated. In response to this event, the download manager 213 erases ENAV-Unit 1 for Chapter 1, which is stored in the buffer 2091a. Subsequently, the download manager 213 loads download information for ENAV-Unit 3, and downloads data which form ENAV-Unit 3 from the server unit 500. Some data of ENAV-Unit 3 to be downloaded may often overlap those of ENAV-Unit 1. In such case, data in the buffer 2091a are erased while leaving data that can be re-used for ENAV-Unit 3, in place of erasing all data of ENAV-Unit 1 stored in the buffer 2091a, as described above. Also, some data of ENAV-Unit 3 to be downloaded may often overlap those of ENAV-Unit 2. In such case, some data of ENAV-Unit 2 that have already been stored in the buffer 2091b are referred to or copied to the buffer 2091a. In this way, the time required to download ENAV-Unit 3 can be shortened.

By repeating the aforementioned processes, synchronous playback of the DVD-Video contents C1 and ENAV contents C22 can be realized using the buffers 2091a and 2091b with the limited size.

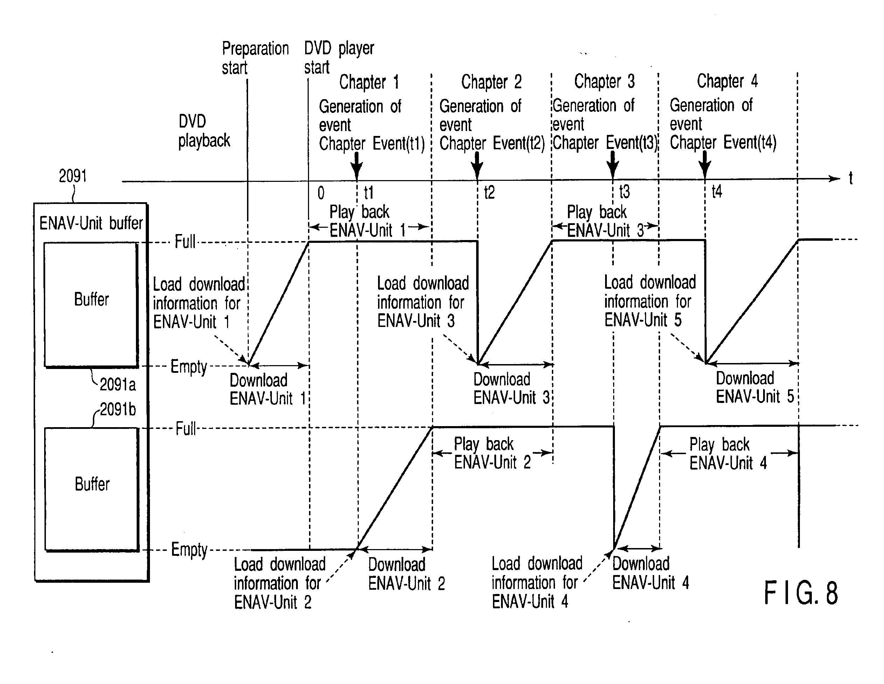

FIG. 8 shows another example of the relationship between the playback process of the DVD-Video contents C1 and the download process of the ENAV contents C22 upon playing back the ENAV contents C22 to be acquired from the server unit 500 in synchronism with the DVD-Video contents C1.

In this example as well, one ENAV-Unit is made up of ENAV contents (ENAV document, still picture data, animation/moving picture data, audio data, and the like) synchronized with one chapter of the DVD-Video contents. For example, ENAV-Unit 1 is played back in synchronism with Chapter 1 of the DVD-Video contents C1, and ENAV-Unit 2 is played back in synchronism with Chapter 2 of the DVD-Video contents. One ENAV-Unit is formed to have a size that can be stored in the buffer 2091a or 2091b in the ENAV-Unit buffer 2091. Respective ENAV-Units synchronized with the DVD-Video contents C1 are alternately recorded in the buffers 2091a and 2091b.

Upon starting up the ENAV engine 200, the download manager 213 loads download information for ENAV-Unit 1 in accordance with an instruction of the ENAV document. The download information for ENAV-Unit 1 describes the file names and locations, file sizes, and contents types of an ENAV document (Markup language/Script language), still picture data, animation/moving picture data, and non-synchronized audio data, which form ENAV-Unit 1, i.e., the ENAV-Unit synchronized with Chapter 1. The download manager 213 acquires files described as those for ENAV-Unit 1 from the server unit 500 or the enhanced DVD-Video disk D2 in the disk unit 300 on the basis of the download information for ENAV-Unit 1, and loads them onto the buffer 2091a of the ENAV-Unit buffer 2091. At this time, data may be loaded from the server unit 500 or the enhanced DVD-Video disk D2 in the disk unit 300 on the basis of the download information in the order described in the file or all data may begin to be loaded at the same time.

Upon completion of downloading of the data of ENAV-Unit 1, the AV renderer 203 starts synchronous playback of Chapter 1 of the DVD-Video contents C1 and ENAV-Unit 1 of the ENAV contents C22.

After an elapse of t1 from the beginning of playback of the DVD-Video contents C1, i.e., when a time event (TimeEvent(t1)) indicating the elapse of t1 is generated, the download manager 213 loads download information for ENAV-Unit 2 in response to generation of this time event. Note that t1 (sec) can be defined by:

$$t1 = T2 - m2/s$$

where m2 (bits) is the size of ENAV-Unit 2, s (bps) is the communication rate, and T2 (sec) is the playback start time of Chapter 2. The download information for ENAV-Unit 2 describes the file names and locations, file sizes, and contents types of an ENAV document (Markup language/Script language), still picture data, animation/moving picture data, and non-synchronized audio data, which form ENAV-Unit 2, i.e., the ENAV-Unit synchronized with Chapter 2. The download manager 213 acquires files described as ENAV-Unit 2 from the server unit 500 or the enhanced DVD-Video disk D2 in the disk unit 300 on the basis of the download information for ENAV-Unit 2, and loads them onto the buffer 2091b of the ENAV-Unit buffer 2091. At this time, since the DVD-Video playback engine 100 is playing back Chapter 1 of the DVD-Video contents C1, the download source must be limited to only the server unit 500 so as to guarantee seamless playback of the DVD-Video contents C1. Also, some data of ENAV-Unit 2 to be downloaded may have already been downloaded to the buffer 2091a. For example, some data of ENAV-Unit 2 may often overlap those of ENAV-Unit 1. In such case, the time required to download ENAV-Unit 2 can be shortened by referring to some data in the buffer 2091a or copying them to the buffer 2091b.

After an elapse of t2 from the beginning of playback of the DVD-Video contents C1, i.e., when a time event (TimeEvent(t2)) indicating the elapse of t2 is generated, the download manager 213 erases ENAV-Unit 1 for Chapter 1, which is stored in the buffer 2091a in response to generation of this time event. Subsequently, the download manager 213 loads download information for ENAV-Unit 3, and downloads data which form ENAV-Unit 3 from the server unit 500. Note that t2 (sec) can be defined by:

$$t2=T3-m3/s$$

where m3 (bits) is the size of ENAV-Unit 3, s (bps) is the communication rate, and T3 (sec) is the playback start time of Chapter 3. At this time, some data of ENAV-Unit 3 to be downloaded may often overlap those of ENAV-Unit 1. In such case, data in the buffer 2091a are erased while leaving data that can be re-used for ENAV-Unit 3, in place of erasing all data of ENAV-Unit 1 stored in the buffer 2091a, as described above.

Also, some data of ENAV-Unit 3 to be downloaded may often overlap those of ENAV-Unit 2. In such case, some data of ENAV-Unit 2 that have already been stored in the buffer 2091b are referred to or copied to the buffer 2091a. In this way, the time required to download ENAV-Unit 3 can be shortened.

By repeating the aforementioned processes, synchronous playback of the DVD-Video contents C1 and ENAV contents C22 can be realized using the buffers 2091a and 2091b with the limited size.

The flows of the download processes shown in FIGS. 7 and 8 will be summarized below. As for the load timing of download information, for example, When ENAV contents to be downloaded is ENAV-Unit k which is synchronized with Chapter k, the download process is executed at the timing of ChapterEvent(k-1) indicating the start of Chapter (k-1). Or the download process is executed at the timing of TimeEvent(Tk-mk/s) (where mk is the size of ENAV-Unit k, s is the communication rate, and Tk is the playback start time of Chapter k). Furthermore, when the playback start time of Chapter (k-1) is T(k-1), DVD-Video contents with a sufficiently large time interval between chapters, which satisfies:

$$Tk-T(k-1) > mk/s$$

are required.

As another embodiment, a case will be exemplified below wherein download data for a DVD-Video title are collected together.

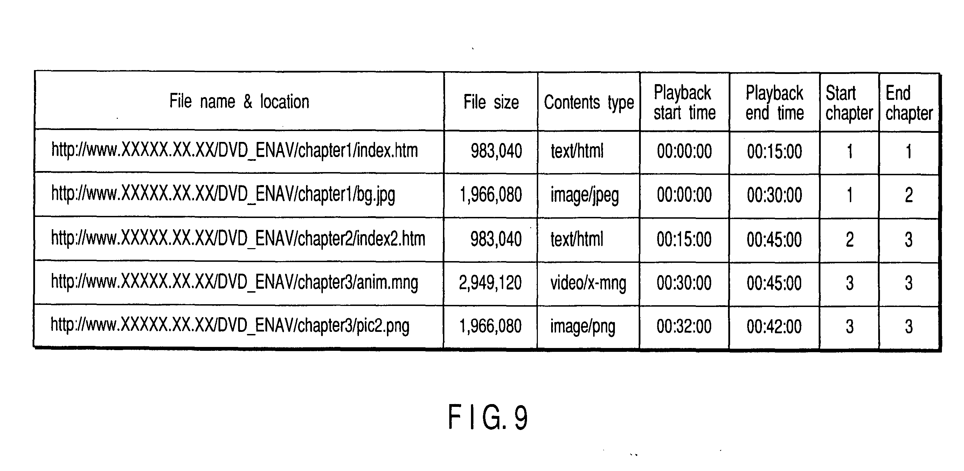

FIG. 9 shows an example of download information which is described as a text file. The download information consists of information of a file name & location field, file size field, contents type field, playback start time field, playback end time field, playback start chapter field, playback end chapter field, and the like. In this example, the file name & location field describes the URL address and file name of each file to be downloaded, the file size field describes the file size of that file in bytes, and the contents type field describes the MIME type of the file. The playback start time field describes the time at which playback of that file is to start. The playback end time field describes the time at which playback of that file is to end. The playback start chapter field describes a chapter from which playback of that file is to start. The playback end chapter field describes a chapter at which playback of that file is to end. For example, since the playback start chapter is included in the playback start time and the playback end chapter is included in the playback end time, both of them need not always be described. The time is described based on the DVD system clock 103 of the DVD-Video playback engine 100 or the ENAV system clock 214 of the ENAV engine 200.

The download information in FIG. 9 can be described in the XML format as follows.

```
<?xml version="1.0" encoding="utf-8" ?>
<DownloadInformation
xmlns="http://XXXXX.XX.XX/di_schema.xsd">
<DownloadInfromationID>0</DownloadInformationID>
<DownloadInfromationName>Total
Information</DownloadInformationName>
<DownloadData>
   <DownloadID>1</DownloadID>
   <DownloadName>index.htm</DownloadName>

<DownloadLocation>http://www.XXXXX.XX.XX/DVD_ENAV/chapt
er1/index.htm</DownloadLocation>
   <DownloadFileSize>983040</DownloadFileSize>
   <DownloadContentType>text/html</DownloadContentType>
   <PlayStartTime>0</PlayStartTime>
   <PlayEndTime>900</PlayEndTime>
   <PlayStartChapter>1</PlayStartChapter>
   <PlayEndChapter>1</PlayEndChapter>
</DownloadData>
<DownloadData>
   <DownloadID>2</DownloadID>
   <DownloadName>bg.jpg</DownloadName>




<DownloadLocation>http://www.XXXXX.XX.XX/DVD_ENAV/chapt
er1/bg.jpg</DownloadLocation>
   <DownloadFileSize>1966080</DownloadFileSize>
   <DownloadContentType>image/jpeg</DownloadContentType>
   <PlayStartTime>0</PlayStartTime>
   <PlayEndTime>1800</PlayEndTime>
   <PlayStartChapter>1</PlayStartChapter>
   <PlayEndChapter>2</PlayEndChapter>
</DownloadData>

</DownloadInformation>
```

One download information (DownloadInformation) consists of one download information ID (DownloadInformationID), one download information name (DownloadInformationName), and one or more download data (DownloadData). One download data consists of one download ID (DownloadID), one download name (DownloadName) indicating a file name, one download location (DownloadLocation) indicating a file name and location, one download file size (DownloadFileSize) indicating the file size in bytes, one download content type (DownloadContentType) indicating the MIME type, one play start time (PlayStartTime) indicating the playback start time, one play end time (PlayEndTime) indicating the playback end time, one play start chapter (PlayStartChapter) indicating the playback start chapter, and one play end chapter (PlayEndChapter) indicating the playback end chapter.

In addition to the above description, the download information can be described for each chapter as follows.

```
<?xml version="1.0" encoding="utf-8" ?>
<DownloadInformation
xmlns="http://XXXXX.XX.XX/di_schema.xsd">
<DownloadInfromationID>0</DownloadInformationID>
<DownloadInfromationName>Total Information
2</DownloadInformationName>


<Chapter>
  <ChapterID>1</ChapterID>
<DownloadData> …… </DownloadData>
<DownloadData> …… </DownloadData>
……
</Chapter>
  <ChapterID>2</ChapterID>
……
</DownloadInformation>
```

In this example, one download information (DownloadInformation) consists of one download information ID (DownloadInformationID), one download information name (DownloadInformationName), and one or more chapters (Chapter). One chapter consists of a chapter ID (ChapterID) and one or more download data (DownloadData). Assume that the download data has the same contents as that described above.

The sequence upon loading download data will be explained below using FIG. 5.

Download information (download data) recorded in the enhanced DVD-Video disk D2 or server unit 500 is loaded to the playback apparatus as follows. That is, the ENAV engine 200 is started to load an ENAV document, and download information is loaded from the location of the disk unit 300 or server unit 500 designated by the ENAV document or the predetermined location of the disk unit 300 or server unit 500. The loaded download information is interpreted by the download manager 213 in the ENAV engine 200. The download manager 213 acquires each file (ENAV contents) from the designated location of the server unit 500 or disk unit 300 in accordance with the timing designated by the download information, and downloads the file onto the ENAV buffer 209 (download control).

For example, as for the download timing of ENAV contents, the playback apparatus (download manager 213) loads ENAV contents with high priority of playback within the capacity of the ENAV buffer 2091 with reference to the file size and playback start time of download data. Then, playback starts accordingly. Next, ENAV contents which have been played back are erased from the ENAV-Unit buffer 2091 with reference to the playback end time, and new ENAV contents are loaded.

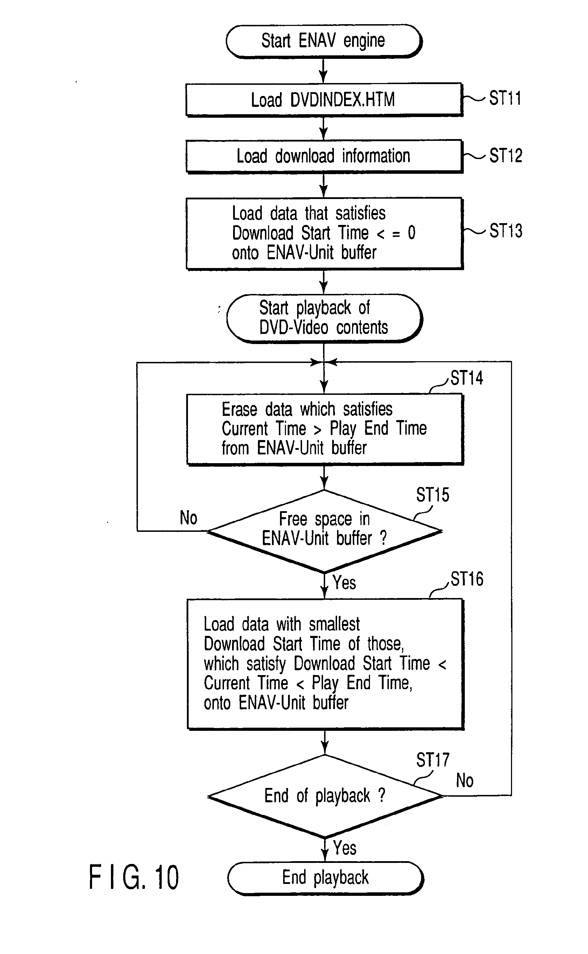

FIG. 10 shows an example of the sequence upon downloading ENAV contents.

ENAV contents (expansion information) are acquired from at least one of the enhanced DVD-Video disk D2 and the external server 500 via a communication line (ST11). That is, the ENAV engine 200 acquires ENAV contents. More specifically, when the ENAV engine 200 is started up, it loads DVDINDEX.HTM as a startup file (ST11). Furthermore, the ENAV engine 200 loads download information contained in ENAV contents recorded in the disk unit 300 or server unit 500 in accordance with the description of DVDINDEX.HTM or by predetermined means (ST12).

Based on the loaded download information, the acquisition timings of various files which form ENAV elements (expanded contents information) contained in the ENAV contents are controlled. More specifically, a download start time (DownloadStartTime) is calculated for each file described in the download information. Note that the download start time (DownloadStartTime) is defined by:

$$\text{PlayStartTime-DownloadFileSize} \times 8/s$$

where PlayStartTime is the playback start time (sec), DownloadFileSize is the size (bytes) of that file, and s is the communication rate (Mbps).

Of files described in the download information, files which satisfy PlayStartTime <= 0, i.e., files which must begin to be downloaded before the beginning of playback of the DVD-Video contents, are downloaded, and are loaded onto the ENAV-Unit buffer 2091 (ST13).

After all files which satisfy PlayStartTime <= 0 are loaded onto the ENAV-Unit buffer 2091, synchronous playback of the DVD-Video contents C1 and ENAV contents C22 (files which form ENAV elements) starts.

Furthermore, during playback of the DVD-Video contents C1, CurrentTime (current playback time) and PlayEndTime (playback end time) of each file described in the download information are compared. If a file which satisfies CurrentTime > PlayEndTime is stored in the ENAV-Unit buffer 2091, i.e., if that file need not be played back again aftertime, the file is erased from the ENAV-Unit buffer 2091 (ST14).

If a free space is found in the ENAV-Unit buffer 2091 (ST15, YES) during playback of the DVD-Video contents C1, CurrentTime (current playback time) and DownloadStartTime (download start time) and PlayEndTime (playback end time) of a file described in the download information are compared. Files which satisfy DownloadStartTime < CurrentTime < PlayEndTime are downloaded in turn from those which have smaller DownloadStartTime preferentially, and are loaded onto the ENAV-Unit buffer 2091 (ST16). The aforementioned process is repeated until playback ends (ST17).

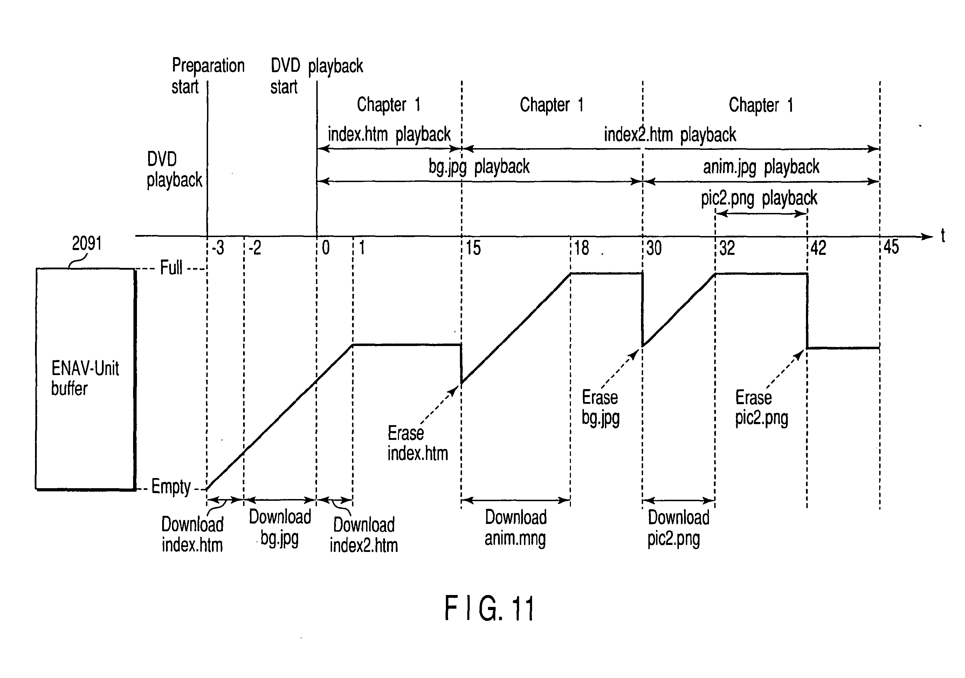

FIG. 11 shows an example of the download process executed according to the download information shown in FIG. 9.

When the ENAV engine 200 is started up, it loads download information together with a startup file, and calculates the download start times of files described in the download information. In this example, if the communication rate is 128 kbps, the download start time of an index.htm file is:

$$\texttt{PlayStartTime-DownloadFileSize} \times 8/s$$
$$=0-983040 \times 8/(128 \times 1024)$$
$$=-1(\texttt{min})$$

Likewise, the download start time of a bg.jpg file is -2 (min), that of an index2.htm file is 14 (min), that of an anim.mng file is 27 (min), and that of a pic2.png file is 30 (min).

Initially, the index.htm file and bg.jpg file, whose download start times are equal to or smaller than zero, are downloaded, and are loaded onto the ENAV-Unit buffer 2091. At this time, the ENAV-Unit buffer 2091 need not have two buffer areas, as shown in FIG. 4, but may have only one buffer area.

Upon completion of loading of the index.htm file and bg.jpg file, whose download start times are equal to or smaller than zero, onto the ENAV-Unit buffer 2091, playback of the DVD-Video contents C1 and ENAV contents C22 starts. At this time, since the index.htm file and bg.jpg file, which have already been loaded onto the ENAV-Unit buffer 2091 as the ENAV contents C22, have a playback start time = 0, they are played back.

After the beginning of playback, since the free space of the ENAV-Unit buffer 2091 can have some margin, the index2.htm file with the smallest download start time is downloaded and is loaded onto the ENAV-Unit buffer 2091.

When playback of Chapter 1 of the DVD-Video contents C1 is complete and that of Chapter 2 has started, the index2.htm file whose playback start time is equal to the start time of Chapter 2 of the files in the ENAV-Unit buffer 2091 begins to be played back. At the same time, of the files in the ENAV-Unit buffer 2091, the index.htm file whose playback end time is equal to the start time of Chapter 2 is erased. In this way, since a free space is formed in the ENAV-Unit buffer 2091, the anim.mng file having the smallest download start time of those which are not loaded onto the ENAV-Unit buffer 2091 is acquired, and is loaded onto the ENAV-Unit buffer 2091.

When playback of Chapter 2 of the DVD-Video contents C1 is complete and that of Chapter 3 has started, the anim.mng file whose playback start time is equal to the start time of Chapter 3 of those in the ENAV-Unit buffer 2091 is played back. At the same time, the bg.jpg file whose playback end time is equal to the start time of Chapter 3 of those in the ENAV-Unit buffer 2091 is erased. As a result, since a free space is formed in the ENAV-Unit buffer 2091, the pic2.png file having the smallest download start time of those which are not loaded onto the ENAV-Unit buffer 2091 is acquired, and is loaded onto the ENAV-Unit buffer 2091. Upon completion of downloading, when the playback start time of the pic2.pgn file is reached, that file is played back. At the playback end time of the pic2.png file, that file is erased from the ENAV-Unit buffer 2091.

**Claims**

1. An information playback apparatus **characterized by** comprising:

   a first acquisition unit (100) configured to acquire contents from an information storage medium;
   a second acquisition unit (200, 211) configured to acquire expansion information from at least one of the information storage medium and an external apparatus via a communication line;
   a control unit (213) configured to control an acquisition timing of expanded contents information contained in the expansion information on the basis of control information contained in the expansion information;
   a storage unit (209, 2091) configured to store the expanded contents information acquired by the second acquisition unit under the control of the control unit; and
   a playback unit (101, 203, 2081, 2082) configured to play back the contents, and to play back the expanded contents information, which is acquired at a predetermined timing under the control of the control unit, in synchronism with playback of the contents.

2. An apparatus according to claim 1, **characterized in that** the contents contain a plurality of chapters,
   the control information contains a plurality of pieces of download information corresponding to the plurality of chapters,
   the control unit controls to acquire predetermined expanded contents information corresponding to a predetermined chapter on the basis of predetermined download information corresponding to the predetermined chapter before the beginning of playback of the predetermined chapter, and
   the playback unit plays back the predetermined chapter, and also plays back the predetermined expanded contents information, which is acquired at a predetermined timing under the control of the control unit, in synchronism with playback of the predetermined chapter.

3. An apparatus according to claim 2, **characterized in that** the control unit controls to start acquisition of the predetermined expanded contents information on the basis of the predetermined download information at a playback start timing of another chapter, which is played back immediately before the predetermined chapter.

4. An apparatus according to claim 2, **characterized in that** the control unit determines an acquisition start timing of the predetermined expanded contents information on the basis of a data size of the predetermined expanded contents information indicated by the predetermined download information, a communication rate of the second acquisition unit, and a playback start time of the predetermined chapter, controls to start acquisition of the predetermined expanded contents information at the determined acquisition start timing, and to complete acquisition of the predetermined expanded contents information before the playback start time of the predetermined chapter is reached.

5. An apparatus according to claim 1, **characterized in that** the contents contain a plurality of chapters,
   the control information is download information corresponding to the plurality of chapters, and
   the control unit controls to acquire expanded contents information required before the beginning of playback of the contents on the basis of the download information, to erase expanded contents information, which is not required upon playback of the contents, of expanded contents information stored in the storage unit, and to acquire new expanded contents information required upon playback of the contents in turn from expanded contents information which has higher priority.

6. An information playback method **characterized by** comprising:

   acquiring (ST11, ST12), by an acquisition unit, expansion information from at least one of an information storage medium and an external apparatus via a communication line;
   controlling (ST13) an acquisition timing of expanded contents information contained in the expansion information on the basis of control information contained in the expansion information;

storing (ST13) the expanded contents information acquired at a predetermined timing under the control of the timing; and

playing back (ST14 to 17) contents acquired from the information storage medium, and playing back the expanded contents information, which is acquired at a predetermined timing under the control of the timing, in synchronism with playback of the contents.

7. A method according to claim 6, **characterized in that** the contents contain a plurality of chapters,

the control information contains a plurality of pieces of download information corresponding to the plurality of chapters,

predetermined expanded contents information corresponding to a predetermined chapter is acquired on the basis of predetermined download information corresponding to the predetermined chapter before the beginning of playback of the predetermined chapter, and

the predetermined chapter is played back, and the acquired predetermined expanded contents information is also played back in synchronism with playback of the predetermined chapter.

8. A method according to claim 7, **characterized in that** acquisition of the predetermined expanded contents information is started on the basis of the predetermined download information at a playback start timing of another chapter, which is played back immediately before the predetermined chapter.

9. A method according to claim 7, **characterized in that** an acquisition start timing of the predetermined expanded contents information is determined on the basis of a data size of the predetermined expanded contents information indicated by the predetermined download information, a communication rate of the acquisition unit, and a playback start time of the predetermined chapter,

acquisition of the predetermined expanded contents information is started at the determined acquisition start timing, and

acquisition of the predetermined expanded contents information is completed before the playback start time of the predetermined chapter is reached.

10. A method according to claim 6, **characterized in that** the contents contain a plurality of chapters,

the control information is download information corresponding to the plurality of chapters,

expanded contents information required before the beginning of playback of the contents is acquired on the basis of the download information,

expanded contents information, which is not required upon playback of the contents, of the stored expanded contents information, is erased,

new expanded contents information required upon playback of the contents is acquired in turn from expanded contents information which has higher priority.

DVD-Video disk

D1

| Lead-in area | Volume/file structure information area | DVD-Video area | Another recording area | Lead-out area |
|---|---|---|---|---|
| 1 | 2 | 3 | 4 | 5 |

| VMG | VTS#1 | ....... | VTS#n |
|---|---|---|---|
| | 30 | 31 | 3n |

DVD-Video contents C1

FIG.1

EP 1 437 739 A2

D2

Enhanced DVD-Video disk

| Lead-in area | Volume/file structure information area | DVD-Video area | Another recording area | Lead-out area |
|---|---|---|---|---|

1    2    3    4    5

| VMG | VTS#1 | ……. | VTS#n |
|---|---|---|---|

30   31   3n

DVD-Video contents C1

| Markup/script language | Moving picture data | Still picture data | Audio data | Font data |
|---|---|---|---|---|

40   41   42   43   44

ENAV contents C21

FIG. 2

EP 1 437 739 A2

FIG. 3

100 — DVD-Video playback engine
200 — ENAV engine
300 — Disc unit / D2
400 — User interface unit
500 — Server unit

Disc unit
D2

Video, audio, sub-picture data
Control signal

DVD-Video playback controller — 102
DVD control
DVD status
DVD trigger

DVD system clock — 103

DVD-Video decoder — 101
Moving picture
Audio
Sub-picture

Video, audio

AV renderer (Video output control / audio output control) — 203
Video, audio
DVD timing
Element control

Audio
Element decoder
Synchro-nized audio — 2082
2081

Element decoder — Non-synchro-nized audio / Still picture / Text, font / Moving picture, animation
Element control
ENAV timing
Layout control
Text

AV output control
Property buffer — 202a
DVD timing generator — 202b
ENAV interface handler — 202
ENAV event
ENAV property
ENAV command
ENAV control

ENAV system clock — 214
ENAV timing
Timing
ECMA Script interpreter & DOM manipulator — 205
ECMA Script module
SMIL module
SMIL timing engine — 206

XHTML/CSS layout manager — 207
XHTML module
XHTML+SMIL/CSS parser — 209

User's operation
User trigger

Buffer control
Buffer manager — 204
Buffer control
Download control
Download manager — 213
Download control

ENAV buffer — 210

Network manager — 212

ENAV document, audio, still picture, animation, font
ENAV contents C21 (preload) — 211
ENAV contents C22 (download)

Download data

Server unit — 500

22

Disk unit    D2

300

Preload    ENAV
contents C21

500

209

Download
ENAV
contents
C22    211

Server unit

ENAV buffer    2091

ENAV-Unit buffer    2091a

1    Buffer    o 1

2    Buffer    2

2091b

Non-synchronized audio
Still picture
Animation / moving picture

Synchronized audio buffer    2092

2092a

A    Buffer    A

B    Buffer    B

2092b

Synchronized audio

Font buffer

Font

2093

FIG. 4

FIG. 5

| File name & location | File size | Contents type |
|---|---|---|
| http://www.XXXXX.XX.XX/DVD_ENAV/chapter1/index.htm | 25,852 | text/html |
| http://www.XXXXX.XX.XX/DVD_ENAV/chapter1/bg.jpg | 35,951 | image/jpeg |
| http://wwww.XXXXX.XX.XX/DVD_ENAV/chapter1/pic1.png | 357,147 | image/png |
| http://www.XXXXX.XX.XX/DVD_ENAV/chapter1/bgm.ac3 | 456,122 | audio/x-ac3 |
| ... | ... | ... |
| http://www.XXXXX.XX.XX/DVD_ENAV/chapter1/anim.mng | 123,789 | video/x-mng |

# FIG. 6

FIG. 7

FIG. 8

| File name & location | File size | Contents type | Playback start time | Playback end time | Start chapter | End chapter |
|---|---|---|---|---|---|---|
| http://www.XXXXX.XX.XX/DVD_ENAV/chapter1/index.htm | 983,040 | text/html | 00:00:00 | 00:15:00 | 1 | 1 |
| http://www.XXXXX.XX.XX/DVD_ENAV/chapter1/bg.jpg | 1,966,080 | image/jpeg | 00:00:00 | 00:30:00 | 1 | 2 |
| http://www.XXXXX.XX.XX/DVD_ENAV/chapter2/index2.htm | 983,040 | text/html | 00:15:00 | 00:45:00 | 2 | 3 |
| http://www.XXXXX.XX.XX/DVD_ENAV/chapter3/anim.mng | 2,949,120 | video/x-mng | 00:30:00 | 00:45:00 | 3 | 3 |
| http://www.XXXXX.XX.XX/DVD_ENAV/chapter3/pic2.png | 1,966,080 | image/png | 00:32:00 | 00:42:00 | 3 | 3 |

FIG. 9

EP 1 437 739 A2

Start ENAV engine

Load DVDINDEX.HTM ~ST11

Load download information ~ST12

Load data that satisfies
Download Start Time < = 0
onto ENAV-Unit buffer ~ST13

Start playback of
DVD-Video contents

ST14
Erase data which satisfies
Current Time > Play End Time
from ENAV-Unit buffer

ST15
No ← Free space in
ENAV-Unit buffer ?

↓ Yes   ST16
Load data with smallest
Download Start Time of those,
which satisfy Download Start Time <
Current Time < Play End Time,
onto ENAV-Unit buffer

ST17
End of playback ?   No

↓ Yes

F I G. 10   End playback

Preparation start

DVD playback start

Chapter 1 index.htm playback

Chapter 1 index2.htm playback

Chapter 1

DVD playback

bg.jpg playback

anim.jpg playback

pic2.png playback

2091

t

-3   -2   0   1   15   18   30   32   42   45

Full

ENAV-Unit buffer

Erase index.htm

Erase bg.jpg

Erase pic2.png

Empty

Download index.htm

Download bg.jpg

Download index2.htm

Download anim.mng

Download pic2.png

F I G. 11

EP 1 437 739 A2